# EUROPEAN PATENT SPECIFICATION

(11) **EP 0 822 651 B1**
(45) Date of publication and mention of the grant of the patent: **25.04.2007**
(21) Application number: 97410083.6
(22) Date of filing: 29.07.1997
(51) Int. Cl.: H02P 6/18

(54) **A bemf zero-crossing detection system of a multiple-phase motor**
Nulldurchgangsfeststellung der Gegen-EMK eines mehrphasigen Motors
Système de détection des passages par zéro de la FCEM d'un moteur à phases multiples

(30) Priority: 31.07.1996 FR 9609880
(43) Date of publication of application: 04.02.1998
(73) Proprietor: STMicroelectronics Pte Ltd., Singapore 2056 (SG)
(72) Inventor: Sakti, Rana, 569508 Singapore (SG); Chow, Keng-Kwok, 1851 Singapore (SG)
(74) Representative: de Beaumont, Michel

(56) References cited:
- EP-A- 0 574 339
- US-A- 5 172 036
- US-A- 5 245 256
- AREFEEN M S ET AL: "ELIMINATION OF DISCRETE POSITION SENSOR FOR SYNCHRONOUS RELUCTANCE MOTOR" PROCEEDINGS OF THE ANNUAL POWER ELECTRONICS SPECIALISTS CONFERENCE (PESC), SEATTLE, JUNE 20 - 25, 1993, no. CONF. 24, 20 June 1993, INSTITUTE OF ELECTRICAL AND ELECTRONICS ENGINEERS, pages 440-445, XP000399475

## Description

The present invention relates to a multiple-phase synchronous motor, such as the three-phase spindle motor of a hard disk drive. The invention more particularly relates to the speed control of such a motor by detecting the zero-crossing of the back electromotive force (bemf) in one phase set at high impedance of the motor.

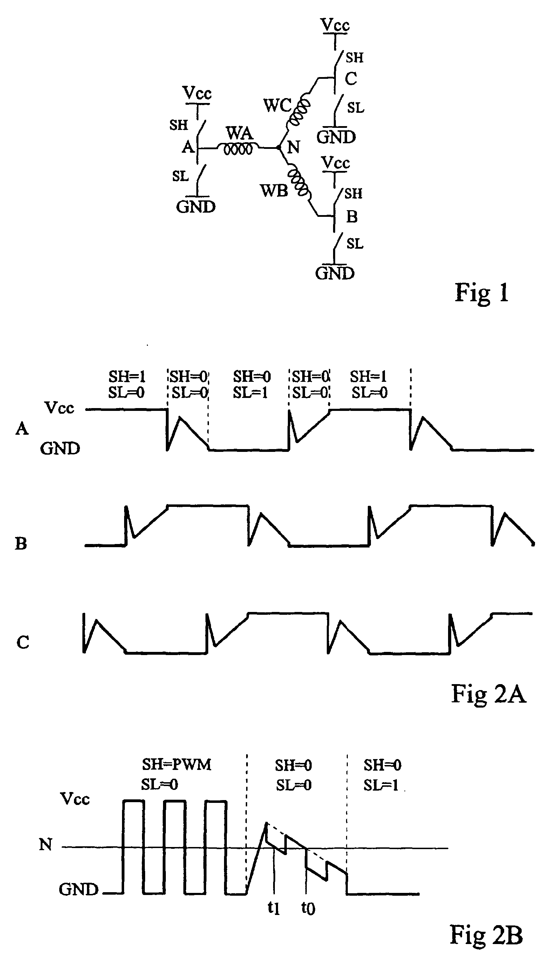

Figure 1 schematically shows the connections of the three phases of a hard disk spindle motor. The motor comprises three windings WA, WB and WC having one terminal connected to a common center tap N. The remaining terminals A, B and C of the three windings are controlled by a three-phase switch bridge, i.e. each of terminals A, B and C is coupled to a low supply voltage GND through a low side switch SL, and coupled to a high supply voltage Vcc through a high side switch SH.

Figure 2A shows exemplary voltage waveforms at the terminals A, B and C, illustrating a conventional control cycle of the switches SH and SL.

Each of terminals A, B and C is successively connected to voltage Vcc (SH = 1, SL = 0), set at high impedance or "tri-stated" (SH = 0, SL = 0), and finally connected to the low voltage GND (SH = 0, SL = 1). As shown, the time intervals where the terminals are connected to voltage Vcc or to voltage GND are twice as long as the time intervals where the terminals are tri-stated. Furthermore, the controls of terminals B and C are shifted by 120° and 240°, respectively, relative to the control of terminal A, so that, at each sixth of a switching cycle, while one winding is in turn tri-stated, the two other windings are supplied in series between voltages Vcc and GND.

The voltage across the winding which is tri-stated is representative of the bemf of the motor. This voltage is measured and its zero-crossing (relative to the voltage at the center tap N) is detected to provide a speed information of the motor which is used for servo-controlling the motor. As shown, the voltage at the terminal of a tri-stated phase begins with a spike due to inductive recirculation and continues with an increasing or decreasing portion of a sinusoid. The zero-crossing detection is enabled only during the sinusoid portions.

In low power motors, the speed is adjusted by varying the conductance of the high or low side switches. Such a speed control causes a power loss in the switches which may be acceptable for low power motors but becomes excessive in higher power motors.

To reduce the power losses, it would be convenient to control the switches by pulse-width modulation (PWM). However, as explained hereunder, pulse-width modulation affects the reliable detection of the bemf zero-crossings.

Figure 2B illustrates an enlarged portion of a waveform of figure 2A, in the case where pulse-width modulation is used. During the supply time interval of a pair of windings, the voltage at one terminal of the pair is chopped between voltages Vcc and GND. When this terminal is tri-stated, its voltage is affected by the chopping which continues on the next terminal. As shown, this voltage is chopped between the bemf value and a lower value. A false zero-crossing detection occurs at a time t₁ well before the zero-crossing of the bemf (time t₀).

Some circuits, like circuit L6232B manufactured by SGS-Thomson Microelectronics, regulate the nominal speed of the motor, as explained above, by adjusting the conductance of the low side switches SL and, when the motor is started, use pulse-width modulation in order to reduce the current drawn from the power supply. As indicated above, these circuits are only adapted to low power motors.

US-A-5,172,036 resynchronizes the rotor of a polyphase motor and describes a zero crossing detection of the back electronic force, measuring a delay after the bemf crosses zero to initiate a communication.

An object of the present invention is to provide a bemf zero-crossing detection method and a control device which will operate conveniently with a pulse-width modulated speed regulation and control high power synchronous motors with low power losses.

To achieve this object, the present invention provides a method for detecting a threshold-crossing of the back electromotive force measured in one phase of a multiple-phase motor, wherein said one phase is set at a high impedance while at least one other phase is supplied by pulse-width modulation, comprising the step of comparing the bemf with said threshold. Prior to the step of comparing, the method comprises the steps of sampling the bemf during the on-periods of the pulse-width modulation, and holding the bemf during the off-periods of the pulse-width modulation.

According to an embodiment of the invention, the sampling and holding steps of the bemf are realized on a capacitor, and the method comprises the step of modifying the charge of the capacitor during an off-period of the pulse-width modulation, so that the voltage on the capacitor substantially joins the bemf value at the beginning of the next on-period of the pulse-width modulation.

According to an embodiment of the invention, the method comprises the step of forcing an on-period of the pulse-width modulation in a window where the bemf is likely to cross said threshold.

According to an embodiment of the invention, said window ends at a threshold-crossing detection.

According to an embodiment of the invention, the method comprises the step of using said window only for the first threshold-crossing detection.

The invention also provides a control device for a multiple-phase motor, wherein one phase is set at a high impedance for measuring the back electromotive force of the motor while at least one other phase is supplied by pulse-width modulation, comprising a comparator for detecting the bemf crossing a threshold, and a sample and hold circuit operative for sampling the bemf during on-periods of the pulse-width modulation and holding the bemf during off-periods of the pulse-width modulation, said comparator receiving the output of the sample and hold circuit.

According to an embodiment of the invention, the sample and hold circuit comprises a sample and hold capacitor, and the control device comprises a circuit for modifying the charge of said capacitor, so that the voltage of the capacitor during an off-period of the pulse-width modulation substantially joins the bemf value at the beginning of the next on-period of the pulse-width modulation.

According to an embodiment of the invention, the device comprises a window comparator for forcing an on-period of the pulse-width modulation in a window where the bemf is likely to cross said threshold.

According to an embodiment of the invention, said circuit for modifying the charge comprises a current source, such as a resistor, connected between the capacitor and an appropriate voltage during the off-periods of the pulse-width modulation.

The foregoing and other objects, features, aspects and advantages of the invention will become apparent from the following detailed description of the present invention when taken in conjunction with the accompanying drawings.
Figures 1 to 2B, previously described, illustrate the state of the art and the related problems;
Figure 3 schematically shows an embodiment of a bemf zero-crossing detection system according to the invention; and
Figure 4 shows an enlarged waveform of the bemf voltage as processed by the circuits of figure 3, in the vicinity of its zero-crossing point.

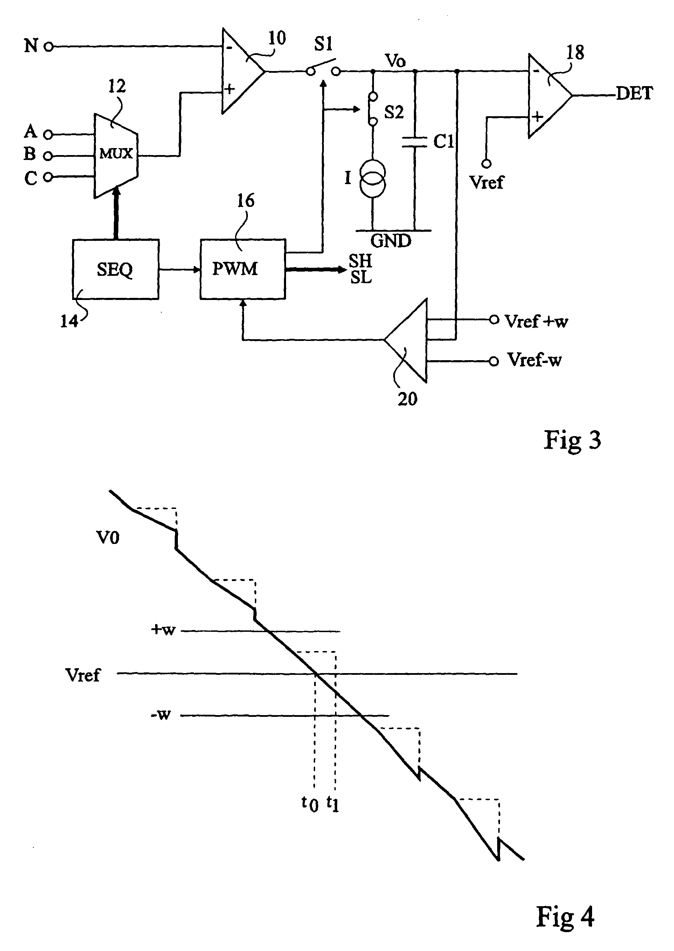

In figure 3, an inverting input of a differential amplifier 10 receives the voltage at the center tap N of the windings of a synchronous motor of the type of figure 1. A non-inverting input of differential amplifier 10 receives the output of an analog multiplexer 12 which is controlled by a sequencer 14 to select, among the terminals A, B and C, the one which is tri-stated.

Sequencer 14 conventionally determines the switching sequence of switches SH and SL of figure 1 in order to produce the waveforms of figure 2A. Switches SH and SL are effectively controlled by sequencer 14 through a pulse-width modulator 16 which is intended to adjust the current in the windings of the motor in order to regulate the speed. The pulse-width modulator 16 is always operative, even at the nominal speed of the motor.

According to an aspect of the invention, the output of differential amplifier 10 is provided to a sample and hold circuit comprising a switch S1 and a capacitor C1. A first terminal of capacitor C1 is connected to a constant voltage, for example low supply voltage GND, and its second terminal, from which the sampled and held voltage Vo is taken, is connected to the output of differential amplifier 10 through switch S1. Switch S1 is controlled by the pulse-width modulator 16 so that it turns on each time a high side switch SH or a low side switch SL of the bridge of figure 1 is turned on, i.e. during each on-period of the pulse-width modulation where a current is forced through windings of the motor. The voltage across the winding which is tri-stated is then sampled by capacitor C1. During each off-period of the pulse-width modulation, i.e. when no current is forced through windings of the motor, switch S1 is turned off, whereby capacitor C1 holds the voltage reached on the tri-stated terminal.

The sampled and held voltage Vo is provided to an inverting input of a comparator 18. A non-inverting input of comparator 18 receives a reference voltage Vref which is equal to the value of voltage Vo at the zero-crossing of the bemf (Vref = Vcc/2 if the impedances of the windings of the motor are equal). Comparator 18 provides a detection signal DET which goes high as soon as voltage Vo goes below voltage Vref. Thus, comparator 18 provides a zero-crossing detection by each edge of its output DET (a rising edge for a decreasing bemf and a falling edge for an increasing bemf). These rising or falling edges are taken into account for determining the speed outside the time intervals where spikes caused by inductive recirculation are likely to occur. Preferably, comparator 18 is provided with a slight hysteresis to avoid generation of spurious edges about the zero-crossing point due to noise.

Figure 4 shows, in dotted lines, the evolution of the sampled and held voltage Vo for a decreasing bemf and according to the aspect of the invention described up to now. During the on-periods of the pulse-width modulation, voltage Vo follows the evolution of the bemf. During the off-periods of the pulse-width modulation, voltage Vo stays constant, and thus departs from the bemf, during the entire off-period. At the beginning of the next on-period, capacitor C1 is abruptly discharged down to the value of the bemf.

With this operation, if a zero-crossing of the bemf occurs at a time to during an off-period of the pulse-width modulation, as shown, a false detection will occur at a time t₁ at the beginning of the next on-period. The error between the false detection and the correct detection is at most equal to an off-period of the pulse-width modulation whereas, in the conventional case of figure 2B, the error could be of several pulse-width modulation periods.

According to a first embodiment of the invention, the accuracy of the zero-crossing detection is further improved by a slope compensation circuit comprising a switch S2 and a current source I connected in series between the sampled and held voltage output Vo and the low supply voltage GND. Switch S2 is controlled in phase opposition to switch S1, whereby capacitor C1 is discharged through current source I during each off-period of the pulse-width modulation.

The corresponding evolution of the sampled and held voltage Vo is illustrated in full lines in figure 4. During the on-periods of the pulse-width modulation, voltage Vo follows the evolution of the bemf. During the off-periods, capacitor C1 is discharged through current source I, whereby voltage Vo decreases. Preferably, the values of capacitor C1 and of current source I are chosen such that voltage Vo substantially follows the evolution of the bemf during the off-periods of the pulse-width modulation.

The bemf has a sinusoidal shape of the form A·*sin*ωt, where A is the amplitude of the bemf and ω the angular speed of the motor in radians per second. The values of capacitor C1 and current source I will be chosen to obtain the best slope compensation in the vicinity of the bemf zero-crossing at the nominal speed. This is obtained for I/C1 = Aω. Then, as shown in figure 4, in the vicinity of the zero-crossing at time t₀, voltage Vo evolves with a smooth transition between the off and on-periods of the pulse-width modulation. As the distance increases between the zero-crossing point and the considered off-period, the accuracy of the slope compensation decreases, which generates an increasing step between the off-period and the next on-period. This has no consequence on the accuracy of the speed regulation, because the zero-crossing is detected at the point where the slope compensation is most accurate.

The slope compensation circuit of figure 3 is designed for a decreasing bemf. For an increasing bemf, current source I will be connected to high voltage Vcc.

The current source I may be replaced by a resistor having a value equal to Vref/I.

The slope compensation circuit which has just been described is designed for a motor turning at a constant nominal speed and will loose its accuracy at a different speed. In particular, the slope compensation circuit will be inaccurate when the motor is in its starting phase, which will cause jitter in the regulation loop until the nominal speed is reached.

If it is desired to avoid this, the circuit of figure 3 may be provided, according to a second embodiment, with a window comparator 20 which forces the pulse-width modulator 16 to its on-mode when the sampled and held voltage Vo is likely to cross zero. A window framing the zero-crossing point is defined for comparator 20 by values Vref+w and Vref-w. Therefore, within the window Vref ±w, voltage Vo will exactly represent the bemf and ensure an accurate zero-crossing detection.

The window comparator 20 is enabled (i.e. allowed to force the pulse-width modulator 16 in on-mode) when the motor is started, and disabled once a zero-crossing has been detected within the window.

As an alternative, for a decreasing bemf, the second limit Vref-w of the window is omitted, and the window is defined by a predetermined time interval starting at the moment when voltage Vo reaches the first limit Vref+w.

As another alternative, the second limit of the window is the moment when a zero-crossing is detected, so that the pulse-width modulator 16 is allowed to switch to off-mode immediately after the zero-crossing detection. This causes a better continuity in the pulse-width regulation.

## Claims

1. A method for detecting a threshold-crossing of the back electromotive force (bemf) measured in one phase of a multiple-phase motor, wherein said one phase is set at a high impedance while at least one other phase is supplied by pulse-width modulation, comprising the step of comparing (18) the bemf with said threshold (Vref), **characterized in that** it comprises, prior to the step of comparing, the steps of:
- sampling (S1) the bemf during the on-periods of the pulse-width modulation; and
- holding (C1) the bemf during the off-periods of the pulse-width modulation.

2. The method of claim 1, **characterized in that** the sampling and holding (S1, C1) of the bemf are realized on a capacitor (C1), and **in that** it comprises the step of modifying the charge of the capacitor (C1) during an off-period of the pulse-width modulation, so that the voltage on the capacitor substantially joins the bemf value at the beginning of the next on-period of the pulse-width modulation.

3. The method of claim 1 or 2, **characterized in that** it comprises the step of forcing an on-period of the pulse-width modulation in a window (Vref ±w) where the bemf is likely to cross said threshold.

4. The method of claim 3, **characterized in that** said window (Vref±w) ends at a threshold-crossing detection.

5. The method of claim 3, **characterized in that** it comprises the step of using said window (Vref±w) only for the first threshold-crossing detection.

6. A control device for a multiple-phase motor, wherein one phase is set at a high impedance for measuring the back electromotive force (bemf) of the motor while at least one other phase is supplied by pulse-width modulation, comprising a comparator (18) for detecting the bemf crossing a threshold (Vref), **characterized in that** it comprises a sample and hold circuit (S1, C1) operative for sampling the bemf during on-periods of the pulse-width modulation and holding the bemf during off-periods of the pulse-width modulation, said comparator receiving the output (Vo) of the sample and hold circuit.

7. The control device of claim 6, **characterized in that** the sample and hold circuit comprises a sample and hold capacitor (C1), and **in that** the control device comprises a circuit (S2, I) for modifying the charge of said capacitor, so that the voltage of the capacitor during an off-period of the pulse-width modulation substantially joins the bemf value at the beginning of the next on-period of the pulse-width modulation.

8. The control device of claim 6 or 7, **characterized in that** it comprises a window comparator (20) for forcing an on-period of the pulse-width modulation in a window (Vref ±w) where the bemf is likely to cross said threshold.

9. The control device of claim 7, wherein said circuit for modifying the charge comprises a current source (I), such as a resistor, connected between the capacitor (C1) and an appropriate voltage (GND) during the off-periods of the pulse-width modulation.

## Patentansprüche

1. Ein Verfahren zum Detektieren einer Schwellenwertüberquerung der gegenelektromotorischen Kraft (bemf = back electromotive force), die in einer Phase eines Mehrphasenmotors gemessen wird, wobei die eine Phase auf eine hohe Impedanz gesetzt ist, wenigstens eine andere Phase durch Impulsbreitenmodulation versorgt wird, wobei das Verfahren den Schritt des Vergleichens (18) der bemf mit dem Schwellenwert (Vref) aufweist, **dadurch gekennzeichnet, dass** das Verfahren vor dem Schritt des Vergleichens die folgenden Schritte aufweist:
- Abtasten (S1) der bemf während der Ein-Perioden der Impulsbreitenmodulation; und
- Halten (C1) der bemf während der Aus-Perioden der Impulsbreitenmodulation.

2. Verfahren nach Anspruch 1, **dadurch gekennzeichnet, dass** das Abtasten und Halten (S1, C1) der bemf an einem Kondensator (C1) realisiert wird, und dass das Verfahren den Schritt des Modifizierens der Ladung des Kondensators (C1) während einer Aus-Periode der Impulsbreitenmodulation aufweist, so dass die Spannung an dem Kondensator im Wesentlichen mit dem bemf-Wert zu Beginn der nächsten Ein-Periode der Impulsbreitenmodulation zusammenläuft.

3. Verfahren nach Anspruch 1 oder 2, **dadurch gekennzeichnet, dass** das Verfahren den Schritt des Forcierens einer Ein-Periode der Impulsbreitenmodulation in einem Fenster (Vref ±w) aufweist, in dem die bemf wahrscheinlich den Schwellenwert überquert.

4. Verfahren nach Anspruch 3, **dadurch gekennzeichnet, dass** das Fenster (Vref ±w) mit einer Schwellenwertüberquerungsdetektierung endet.

5. Verfahren nach Anspruch 3, **dadurch gekennzeichnet, dass** das Verfahren den Schritt des Verwendens des Fensters (Vref ±w) nur für die erste Schwellenwertüberquerungsdetektierung aufweist.

6. Steuervorrichtung für einen Mehrphasenmotor, wobei eine Phase auf eine hohen Impedanz eingestellt ist, zum Messen der gegenelektromotorischen Kraft (bemf = back electromotive force) des Motors, während wenigstens eine andere Phase durch Impulsbreitenmodulation versorgt wird, wobei die Vorrichtung einen Komparator (18) aufweist zum Detektieren der bemf-Überquerung eines Schwellenwerts (Vref), **dadurch gekennzeichnet, dass** die Vorrichtung eine Abtast- und Halteschaltung (S1, C1) aufweist, zum betriebsmäßigen Abtasten der bemf während der Ein-Perioden der Impulsbreitenmodulation, und zum Halten der bemf während der Aus-Perioden der Impulsbreitenmodulation, wobei der Komparator das Ausgangssignal (Vo) der Abtast- und Halteschaltung empfängt.

7. Steuervorrichtung nach Anspruch 6, **dadurch gekennzeichnet, dass** die Abtast- und Halteschaltung einen Abtast- und Haltekondensator (C1) aufweist, und dass die Steuervorrichtung eine Schaltung (S2, I) aufweist, zur Modifizierung der Ladung des Kondensators, so dass die Spannung an dem Kondensator während einer Aus-Periode der Impulsbreitenmodulation im Wesentlichen mit dem bemf-Wert zu Beginn der nächsten Ein-Periode der Impulsbreitenmodulation zusammenläuft.

8. Steuervorrichtung nach Anspruch 6 oder 7, **dadurch gekennzeichnet, dass** die Vorrichtung einen Fensterkomparator (20) aufweist zum Forcieren einer Ein-Periode der Impulsbreitenmodulation in einem Fenster (Vref ±w) in der die bemf wahrscheinlich den Schwellenwert überquert.

9. Steuervorrichtung nach Anspruch 7, wobei die Schaltung zum Modifizieren der Ladung eine Stromquelle (I) aufweist, wie beispielsweise einen Widerstand, der zwischen dem Kondensator (C1) und einer geeigneten Spannung (GND) während der Aus-Perioden der Impulsbreitenmodulation verbunden ist.

## Revendications

1. Procédé de détection de passage par un seuil de la force contre-électromotrice (fcem) mesurée dans une phase d'un moteur à plusieurs phases, ladite phase étant mise à haute impédance tandis qu'au moins une autre phase est alimentée par modulation de largeur d'impulsion, comprenant l'étape consistant à comparer (18) la fcem audit seuil (Vref), **caractérisé en ce qu'**il comprend, avant l'étape de comparaison, les étapes suivantes :
- échantillonner (S1) la fcem pendant les périodes actives de la modulation de largeur d'impulsion ; et
- bloquer (C1) la fcem pendant les périodes inactives de la modulation de largeur d'impulsion.

2. Procédé selon la revendication 1, **caractérisé en ce que** l'échantillonnage et le blocage (S1, C1) de la fcem sont réalisés sur un condensateur (C1), et **en ce qu'**il comprend l'étape consistant à modifier la charge du condensateur (C1) pendant une période inactive de la modulation de largeur d'impulsion, de manière que la tension sur le condensateur rejoigne sensiblement la valeur de la fcem au début de la période active suivante de la modulation de largeur d'impulsion.

3. Procédé selon la revendication 1 ou 2, **caractérisé en ce qu'**il comprend l'étape consistant à forcer la modulation de largeur d'impulsion à une période active dans une fenêtre (Vref ±w) où la fcem est susceptible de traverser ledit seuil.

4. Procédé selon la revendication 3, **caractérisé en ce que** ladite fenêtre (Vref ±w) se termine lors de la détection d'un passage par le seuil.

5. Procédé selon la revendication 3, **caractérisé en ce qu'**il comprend l'étape consistant à utiliser ladite fenêtre (Vref ±w) pour seulement la première détection de passage par le seuil.

6. Dispositif de commande de moteur à multiples phases, dans lequel une phase est mise à haute impédance pour mesurer la force contre-électromotrice (fcem) du moteur tandis qu'au moins une autre phase est alimentée par modulation de largeur d'impulsion, comprenant un comparateur (18) pour détecter le passage de la fcem par un seuil (Vref), **caractérisé en ce qu'**il comprend un circuit d'échantillonnage-blocage (S1, C1) prévu pour échantillonner la fcem pendant les périodes actives de la modulation de largeur d'impulsion et bloquer la fcem pendant les périodes inactives de la modulation de largeur d'impulsion, ledit comparateur recevant la sortie (Vo) du circuit d'échantillonnage-blocage.

7. Dispositif de commande selon la revendication 6, **caractérisé en ce que** le circuit d'échantillonnage-blocage comprend un condensateur d'échantillonnage-blocage (C1), et **en ce que** le dispositif de commande comprend un circuit (S2, I) pour modifier la charge dudit condensateur, de manière que la tension du condensateur pendant une période inactive de la modulation de largeur d'impulsion rejoigne sensiblement la valeur de la fcem au début de la période active suivante de la modulation de largeur d'impulsion.

8. Dispositif de commande selon la revendication 6 ou 7, **caractérisé en ce qu'**il comprend un comparateur à fenêtre (20) pour forcer la modulation de largeur d'impulsion à une période active dans une fenêtre (Vref ±w) où la fcem est susceptible de traverser ledit seuil.

9. Dispositif de commande selon la revendication 7, dans lequel ledit circuit pour modifier la charge comprend une source de courant (I), telle qu'une résistance, reliée entre le condensateur (C1) et une tension adéquate (GND) pendant les périodes inactives de la modulation de largeur d'impulsion.
